# EUROPEAN PATENT SPECIFICATION

(11) **EP 1 402 750 B1**
(45) Date of publication and mention of the grant of the patent: **19.11.2008**
(21) Application number: 02718125.4
(22) Date of filing: 11.02.2002
(51) Int. Cl.: H04Q 7/38

(54) **HANDOVER IN A CELLULAR COMMUNICATION SYSTEM**
WEITERREICHEN IN EINEM ZELLULAREN KOMMUNIKATIONSSYSTEM
TRANSFERT DE CELLULE DANS UN SYSTEME DE COMMUNICATION CELLULAIRE

(30) Priority: 15.06.2001 GB 0114664
(43) Date of publication of application: 31.03.2004
(73) Proprietor: MOTOROLA, INC., Schaumburg, IL 60196 (US)
(72) Inventor: BURKE, Michael, Edward, Lake Zurich, IL 60196 (US)
(74) Representative: Jepsen, René Pihl
(86) International application number: PCT/EP2002/001497
(87) International publication number: WO 2002/104059

(56) References cited:
- WO-A-01/31948
- US-A- 5 805 995
- US-B1- 6 240 079

## Description

### Field of the Invention

This invention relates to handover in cellular communication systems that support both soft handover and hard handover. The present invention is applicable to, but not limited to, Universal Mobile Telephone Standard (UMTS) cellular communication systems.

### Background of the Invention

In the field of this invention it is known that handover between radio facilities, e.g. cells of a cellular communication system, provides on-going quality of service. Typically, in order to provide continuous, uninterrupted service a call or session that is in progress for a user can be continued while the user's radio quality varies through the use of handover. This handover can either be hard (break before make) or soft (make before break).

In some cellular communication systems, for example UMTS, a user can be assigned a given radio bearer according to his or her specific request for service. The data rate, also termed bandwidth, provided can be lower or higher depending on the service or usage being requested. Thus, for example, in UMTS higher data rate users may be assigned to a dedicated traffic channel, whereas lower data rate users may be assigned to an inferior channel alternative, for example a combination of Random Access Channel (RACH) and Forward Link Access Channel (FACH), hereinafter referred to as a RACH/FACH combination.

An example of a cellular communication system is provided in United States Patent US-B1-6 240 079 which describes a method of assigning lower or higher data rate traffic channels depending on available network resources or on a desired service level.

However, many such inferior channel alternatives, including the above mentioned RACH/FACH combination, only support hard handover, i.e. they do not support soft handover. This is disadvantageous when soft handover is required for a low data rate user.

Thus, there exists a need in the field of the present invention to provide an arrangement wherein handover is improved for a low data rate user assigned to an above mentioned inferior channel alternative that does not support soft handover.

### Statement of Invention

In a first aspect, the present invention provides a method of operating a cellular communication system, as claimed in claim 1.

In a second aspect, the present invention provides apparatus for use in a cellular communication system, as claimed in 7.

In a third aspect, the present invention provides a communication unit, as claimed in 13.

In a fourth aspect, the present invention provides a cellular communication system, as claimed in claim 14.

In a fifth aspect, the present invention provides a communication unit, as claimed in claim 15.

In a sixth aspect, the present invention provides a storage medium storing processor-implementable instructions, as claimed in claim 16.

Further aspects are as claimed in the dependent claims.

In order to provide soft handover for the user, the radio bearer can be changed from the low radio access bearer to a higher one using a dedicated channel (DCH) to allow for a soft handover between cells. Optionally, after the handover is completed and the user is firmly within the new area, the radio bearer may be reverted back to the original bearer attributes.

### Brief Description of the Drawings

Embodiments of the present invention will now be described, by way of example only, with reference to the accompanying drawings, in which:
FIG. 1 is a schematic illustration of a UMTS cellular communication system; and
FIG. 2 is a flowchart showing process steps carried out in an embodiment of the invention.

### Description of Preferred Embodiment

In the preferred embodiment, the invention is applied to a UMTS cellular communication system, but it is to be appreciated the invention can be applied to any system with lower data rate bearers and higher data rate dedicated traffic channels.

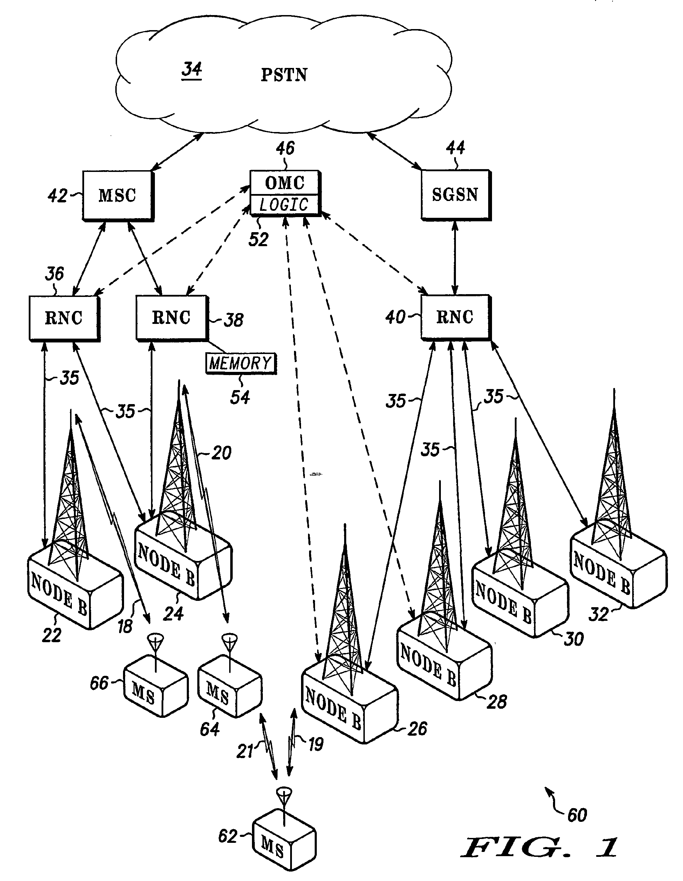

FIG. 1 shows a UMTS cellular communication system 60.

A plurality of subscriber terminals (also known as mobile stations and hereinafter referred to as MS's) 62-66 communicate over radio links 18-21 with a plurality of base stations, referred to under UMTS terminology as Node-B's, 22-32. For clarity purposes, only a limited number of MS's 62-66 and Node-B's 22-32 are shown.

The Node-B's 22-32 are connected to external networks, for example, the public-switched telephone network (PSTN) or the Internet, 34 through Radio Network Controller stations (RNC) (in UMTS terminology) 36-40 and plural mobile switching centres (MSC's), such as MSC 42 (the others are, for clarity, not shown) and Serving GPRS Support Nodes (SGSN) 44.

Each Node-B 22-32 contains one or more transceiver units and communicates with the rest of the cell-based system infrastructure via the I_{ub} interface 35 as defined in the UMTS specification.

Each RNC 36-40 may control one or more Node-B's 22-32. Each MSC 42 provides a gateway to the external network 34, whilst the SGSN 44 links to external packet networks.

The Operations and Management Centre (OMC) 46 is operably connected to RNC's 36-40 and Node-B's 22-32 (shown only with respect to Node-B 26 and Node-B 28 for clarity), and administers and manages the parts of the cellular telephone communication system 60, as will be understood by those skilled in the art.

In this embodiment, the RNC's 36, 38, 40 have been adapted, by provision of a handover improvement module, to offer, and provide for, improved handover from one radio link to another for low data rate users, as will be described in more detail below.

However, this adaptation may be implemented in any suitable manner to provide suitable apparatus. The module may consist of a single discrete entity added to a conventional RNC, or may alternatively be formed by adapting existing parts of a conventional RNC, for example by reprogramming of a one or more processors therein. As such the required adaptation may be implemented in the form of processor-implementable instructions stored on a storage medium, such as a floppy disk, hard disk, PROM, RAM or any combination of these or other storage media. Furthermore, whether a separate entity or an adaptation of existing parts or a combination of these, the module may be implemented in the form of hardware, firmware, software, or any combination of these.

It is also within the contemplation of the invention that such adaptation of transmission characteristics may alternatively be controlled, implemented in full or implemented in part by a module added to or formed by adaptation of any other suitable part of the communication system 60. For example, this may be implemented instead at the node-B's 22-32 when the node-B's 22-32 are combined base station controllers-base transceiver stations, and as such serve more than one cell, or in MSC 42.

Further, in the case of other network infrastructures, implementation may be at any appropriate switching node such as any other appropriate type of base station, base station controller etc. Alternatively the various steps involved in determining and carrying out such adaptation (as will be described in more detail below) can be carried out by various components distributed at different locations or entities within any suitable network or system.

In the system 60, the RNCs 36, 38, 40 assign low data rate users to RACH/FACH combinations. The RACH/FACH combination bearers only support hard handover (break before make), i.e. they do not support soft handover (make before break). The RNCs 36, 38, 40 assign higher data rate users to dedicated traffic channels (DCH). The dedicated traffic channels support both soft handover and hard handover.

Let us assume that MS 62 is currently receiving service from Node-B 24 over radio link 21, and that MS 62 is a low data rate user that has therefore been assigned to a RACH/FACH combination. This embodiment will now be further described for the situation when the MS 62 moves such that it will leave the area (cell) serviced by the Node-B 24 and into the area (cell) serviced by the Node-B 26 and will therefore need to be handed over to a new radio link 19 provided by the Node-B 26.

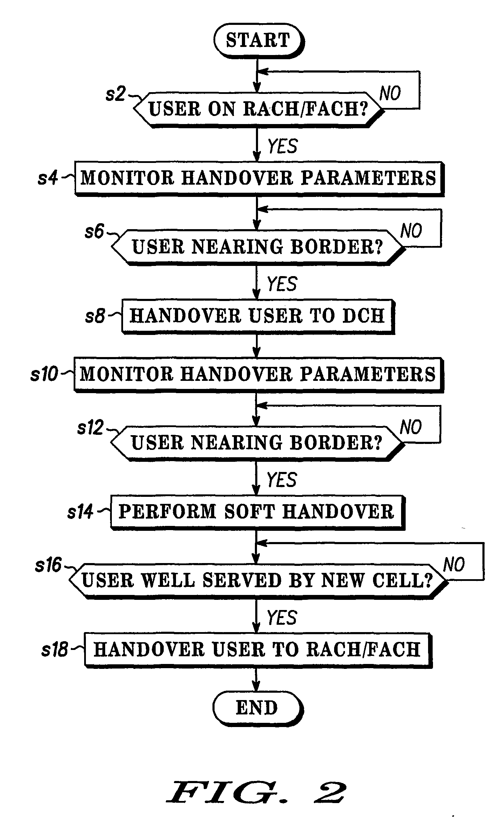

FIG. 2 is a flowchart illustrating the process steps carried out by the handover improvement module, located in this example in the RNC 38, in this embodiment in order to implement the above described handover.

At step s2, the handover improvement module determines whether the MS 62 has been assigned to the RACH/FACH combination bearer. In this case the answer is in the affirmative, so at step s4 the handover improvement module monitors handover parameters of the MS 62 on the RACH/FACH combination.

At step s6 the handover improvement module determines, from the monitored parameters, whether the MS 62 is approaching the border of the current cell (alternatively, or additionally, signal strength may be monitored and analysed as to whether it is decreasing toward a handover threshold level).

If the answer is in the affirmative, at step s8 the handover improvement module re-assigns (this may itself be termed handover) the MS 62 to a dedicated traffic channel.

At step s10 the handover improvement module again monitors the handover parameters.

At step s12 the handover improvement module determines, from the monitored parameters, whether the MS 62 is still approaching the border of the current cell (or when signal strength is the criteria, whether the signal strength is still decreasing toward the handover threshold level).

If the answer is still in the affirmative, at step s14 the handover improvement module performs a soft handover of the MS 62 from the radio link 21 provided by the Node-B 24 to the new radio link 19 provided by the Node-B 26. Service is thus continued from Node-B 26 on a dedicated traffic channel.

This represents the completion of one example of the preferred embodiment. The above process may be performed entirely by the handover improvement module located at RNC 38.

However, optionally, the process may be continued by implementation of step s18, in which, once handover has been completed, e.g. the call is safely or adequately contained in the new cell, the MS 62 is re-assigned to a RACH/FACH combination. This part of the process may be performed by a further handover improvement module located at the RNC 40, as this RNC is responsible for the new serving Node-B 26. Another possibility is that the overall process containing steps s2 to s18 may be performed by a single handover improvement module that operates as a distributed function among different entities in the system 60.

The above described handover based on re-assigning from RACH/FACH to a dedicated channel tends to provide a higher quality of service for low bandwidth data users by providing a seamless transition between cells or areas of coverage.

In the above embodiment, the MS 62 is a mobile telephone, but MS 62 may include or consist of any other appropriate form of radio receiving apparatus, for example a personal computer with a radio modem, an electronic organiser, a video and/or audio player, etc.

The present invention finds particular application in wireless communication systems such as UMTS systems. However, the inventive concepts contained herein are equally applicable to alternative wireless communications systems. Whilst the specific, and preferred, implementations of the present invention are described above, it is clear that variations and modifications of such inventive concepts could be readily applied by one skilled in the art.

## Claims

1. A method of operating a cellular communication system (60), comprising:
assigning higher data rate users to higher data rate dedicated traffic channels that support soft handover;
assigning (s2) lower data rate users to lower data rate channel alternatives that support only hard handover;
determining (s6,s12), for a lower data rate user (62) assigned to a lower data channel alternative, that handover is to be required; the method further **characterised by** the steps of:
re-assigning (s8) the lower data rate user (62) to a higher data rate dedicated traffic channel; and
performing (s14) a soft handover of the re-assigned lower data rate user (62) to another higher data rate dedicated traffic channel (19) if handover is still required after the re-assigning step (s8).

2. A method according to claim 1, further **characterised by**:
re-assigning (s18) the lower data rate user (62) to a lower data rate channel alternative after the soft handover is completed.

3. A method according to claim 1 or 2, wherein the step of determining (s6,s12) that handover is to be required comprises determining that the user is approaching a border of a cell area served by the user's current cell.

4. A method according to claim 1 or 2, wherein the step of determining (s6,s12) that handover is to be required comprises determining that handover is to be required because of decreasing signal strength.

5. A method according to any preceding claim, wherein the cellular communication system (60) is a Universal Mobile Telephone Standard, UMTS, system.

6. A method according to claim 5, wherein the lower data rate channel alternative is a bearer provided by a combination of Random Access Channel, RACH, and Forward Link Access Channel, FACH.

7. Apparatus for use in a cellular communication system (60), comprising:
means (38) for assigning higher data rate users to higher data rate dedicated traffic channels that support soft handover;
means (38) for assigning lower data rate users to lower data rate channel alternatives that support only hard handover;
means (38) for determining, for a lower data rate user (62) assigned to a lower data channel alternative, that handover is to be required; the apparatus **characterised by** comprising:
means (38) for re-assigning the lower data rate user (62) to a higher data rate dedicated traffic channel; and
means (24,26) for performing a soft handover of the re-assigned lower data rate user (62) to another higher data rate dedicated traffic channel (19) if handover is still required after re-assigning the lower data rate user.

8. Apparatus according to claim 7, further **characterised by**:
means (38) for re-assigning the lower data rate user (62) to a lower data rate channel alternative after the soft handover is completed.

9. Apparatus according to claim 7 or 8, wherein the means for determining that handover is to be required is arranged to determine that the user (62) is approaching a border of a cell area served by the user's current cell.

10. Apparatus according to claim 7 or 8, wherein the means for determining that handover is to be required is arranged to determine that handover is to be required because of decreasing signal strength.

11. Apparatus according to any of claims 7 to 10, wherein the cellular communication system (60) is a Universal Mobile Telephone Standard, UMTS, system.

12. Apparatus according to claim 11, wherein the lower data rate channel alternative is a bearer provided by a combination of Random Access Channel, RACH, and Forward Link Access Channel, FACH.

13. A communication unit comprising the apparatus according to any of claims 7 to 12.

14. A cellular communication system comprising the apparatus according to any of claims 7 to 12.

15. A communication unit comprising means for performing the steps of any of claims 1 to 6.

16. A storage medium storing processor-implementable instructions for controlling a processor to carry out the method any of claims 1 to 6.

## Patentansprüche

1. Verfahren zum Betreiben eines zellularen Kommunikationssystems (60), das umfasst:
Zuweisen von Anwendern einer höheren Datenrate zu einer höheren Datenrate dedizierten Verkehrskanälen, die ein weiches Handover unterstützen;
Zuweisen (s2) von Anwendern einer niedrigeren Datenrate zu Kanalalternativen mit einer niedrigeren Datenrate, die nur ein hartes Handover unterstützen;
Bestimmen (s6,s12), für einen Anwender (62) einer niedrigeren Datenrate, der einer Kanalalternative mit niedrigerer Datenrate zugewiesen ist, dass ein Handover erforderlich ist; wobei das Verfahren weiterhin durch die folgenden Schritte **gekennzeichnet** ist:
Neuzuweisen (s8) des Anwenders (62) einer niedrigeren Datenrate zu einem einer höheren Datenrate dedizierten Verkehrskanal; und
Durchführen (s14) eines weichen Handovers des Anwenders (62) einer neu zugewiesenen niedrigeren Datenrate zu einem anderen einer höheren Datenrate dedizierten Verkehrskanal (19), wenn ein Handover nach dem Neuzuweisungsschritt (s8) noch erforderlich ist.

2. Verfahren gemäß Anspruch 1, weiterhin **gekennzeichnet durch**:
Neuzuweisen (s18) des Anwenders (62) einer niedrigeren Datenrate zu einer Kanalalternative einer niedrigeren Datenrate, nachdem das weiche Handover abgeschlossen ist.

3. Verfahren gemäß Anspruch 1 oder 2, wobei der Schritt eines Bestimmens (s6,s12), dass ein Handover erforderlich ist, ein Bestimmen umfasst, dass sich der Anwender einer Grenze eines Zellenbereiches nähert, der durch die aktuelle Zelle des Anwenders versorgt wird.

4. Verfahren gemäß Anspruch 1 oder 2, wobei der Schritt eines Bestimmens (s6,s12), dass ein Handover erforderlich ist, ein Bestimmen umfasst, dass ein Handover aufgrund einer abnehmenden Signalstärke erforderlich ist.

5. Verfahren gemäß einem der vorangehenden Ansprüche, wobei das zellulare Kommunikationssystem (60) ein UMTS-System ist (UMTS = universaler Mobiltelefonstandard).

6. Verfahren gemäß Anspruch 5, wobei die Kanalalternative einer niedrigeren Datenrate ein Träger ist, der durch eine Kombination eines Direktzugriffskanals, RACH, und eines Vorwärtsverbindungszugriffskanals, FACH, zur Verfügung gestellt wird.

7. Vorrichtung zur Verwendung in einem zellularen Kommunikationssystem (60), die umfasst:
Mittel (38) zum Zuweisen von Anwendern einer höheren Datenrate zu einer höheren Datenrate dedizierten Verkehrskanälen, die ein weiches Handover unterstützen;
Mittel (38) zum Zuweisen von Anwendern einer niedrigeren Datenrate zu Kanalalternativen mit einer niedrigeren Datenrate, die nur ein hartes Handover unterstützen;
Mittel (38) zum Bestimmen, für einen Anwender (62) einer niedrigeren Datenrate, der einer Kanalalternative mit niedrigerer Datenrate zugewiesen ist, dass ein Handover erforderlich ist; wobei die Vorrichtung **dadurch gekennzeichnet ist, dass** sie umfasst:
Mittel (38) zum Neuzuweisen des Anwenders (62) einer niedrigeren Datenrate zu einem einer höheren Datenrate dedizierten Verkehrskanal; und
Mittel (24,26) zum Durchführen eines weichen Handovers des Anwenders (62) einer neu zugewiesenen niedrigeren Datenrate zu einem anderen einer höheren Datenrate dedizierten Verkehrskanal (19), wenn ein Handover nach einem Neuzuweisen des Anwenders einer niedrigeren Datenrate noch erforderlich ist.

8. Vorrichtung gemäß Anspruch 7, weiterhin **gekennzeichnet durch**:
Mittel (38) zum Neuzuweisen des Anwenders (62) einer niedrigeren Datenrate zu einer Kanalalternative einer niedrigeren Datenrate, nachdem das weiche Handover abgeschlossen ist.

9. Vorrichtung gemäß Anspruch 7 oder 8, wobei das Mittel zum Bestimmen, dass ein Handover erforderlich ist, angeordnet ist, um zu bestimmen, dass sich der Anwender (62) einer Grenze eines Zellenbereiches nähert, der durch die aktuelle Zelle des Anwenders versorgt wird.

10. Vorrichtung gemäß Anspruch 7 oder 8, wobei das Mittel zum Bestimmen, dass ein Handover erforderlich ist, angeordnet ist, um zu bestimmen, dass ein Handover aufgrund einer abnehmenden Signalstärke erforderlich ist.

11. Vorrichtung gemäß einem der Ansprüche 7 bis 10, wobei das zellulare Kommunikationssystem (60) ein UMTS-System ist (UMTS = universaler Mobiltelefonstandard).

12. Vorrichtung gemäß Anspruch 11, wobei die Kanalalternative einer niedrigeren Datenrate ein Träger ist, der durch eine Kombination eines Direktzugriffskanals, RACH, und eines Vorwärtsverbindungszugriffskanals, FACH, zur Verfügung gestellt wird.

13. Kommunikationseinheit, die die Vorrichtung gemäß einem der Ansprüche 7 bis 12 umfasst.

14. Zellulares Kommunikationssystem, das die Vorrichtung gemäß einem der Ansprüche 7 bis 12 umfasst.

15. Kommunikationseinheit, die Mittel zum Durchführen der Schritte einer der Ansprüche 1 bis 6 umfasst.

16. Speichermedium, das prozessorimplementierbare Anweisungen zum Steuern, dass ein Prozessor das Verfahren einer der Ansprüche 1 bis 6 ausführt, speichert.

## Revendications

1. Procédé de mise en oeuvre d'un système de communication cellulaire (60), comprenant :
l'affectation des utilisateurs haut débit à des canaux de trafic dédiés, à haut débit, qui supportent les transferts intercellulaires sans coupure ;
l'affectation (s2) des utilisateurs bas débit à des canaux de réserve, à bas débit, qui ne supportent que les transferts intercellulaires avec coupure ;
la détermination (s6, s 12) du fait qu'un transfert intercellulaire va être requis pour un utilisateur bas débit (62) affecté à un canal de réserve à bas débit ; le procédé étant, en outre, **caractérisé par** les étapes de :
réaffectation (s8) de l'utilisateur bas débit (62) à un canal de trafic dédié à haut débit ; et
exécution (s 14) d'un transfert intercellulaire sans coupure de l'utilisateur bas débit (62) réaffecté vers un autre canal de trafic dédié à haut débit (19), si le transfert intercellulaire est toujours requis après l'étape de réaffectation (s8).

2. Procédé selon la revendication 1, **caractérisé, en outre, par** :
la réaffectation (s18) de l'utilisateur bas débit (62) à un canal de réserve à bas débit, une fois que le transfert intercellulaire sans coupure est achevé.

3. Procédé selon la revendication 1 ou 2, dans lequel l'étape de détermination (s6, s12) du fait qu'un transfert intercellulaire va être requis comprend la détermination du fait que l'utilisateur approche une bordure d'une zone de cellule desservie par la cellule actuelle de l'utilisateur.

4. Procédé selon la revendication 1 ou 2, dans lequel l'étape de détermination (s6, s12) du fait qu'un transfert intercellulaire va être requis comprend la détermination du fait qu'un transfert intercellulaire va être requis en raison d'une diminution de l'intensité du signal.

5. Procédé selon l'une quelconque des revendications précédentes, dans lequel le système de communication cellulaire (60) est un système UMTS (Universal Mobile Telephone Standard).

6. Procédé selon la revendication 5, dans lequel le canal de réserve à bas débit est une voie support fournie par une combinaison d'un canal d'accès aléatoire, RACH, et d'un canal d'accès avancé, FACH.

7. Appareil à utiliser dans un système de communication cellulaire (60), comprenant :
des moyens (38) pour affecter des utilisateurs haut débit à des canaux de trafic dédiés, à haut débit, qui supportent les transferts intercellulaires sans coupure ;
des moyens (38) pour affecter des utilisateurs bas débit à des canaux de réserve, à bas débit, qui ne supportent que les transferts intercellulaires avec coupure ;
des moyens (38) pour déterminer qu'un transfert intercellulaire va être requis pour un utilisateur bas débit (62) affecté à un canal de réserve à bas débit ; l'appareil étant **caractérisé en ce qu'**il comprend :
des moyens (38) pour réaffecter l'utilisateur bas débit (62) à un canal de trafic dédié à haut débit ; et
des moyens (24, 26) pour exécuter un transfert intercellulaire sans coupure de l'utilisateur bas débit (62) réaffecté vers un autre canal de trafic dédié à haut débit (19), si le transfert intercellulaire est toujours requis après la réaffectation de l'utilisateur bas débit.

8. Appareil selon la revendication 7, **caractérisé, en outre, par** :
des moyens (38) pour réaffecter l'utilisateur bas débit (62) à un canal de réserve à bas débit, une fois que le transfert intercellulaire sans coupure est achevé.

9. Appareil selon la revendication 7 ou 8, dans lequel les moyens de détermination du fait qu'un transfert intercellulaire va être requis sont configurés pour déterminer que l'utilisateur (62) approche une bordure d'une zone de cellule desservie par la cellule actuelle de l'utilisateur.

10. Appareil selon la revendication 7 ou 8, dans lequel les moyens de détermination du fait qu'un transfert intercellulaire va être requis sont configurés pour déterminer que le transfert intercellulaire va être requis en raison d'une diminution de l'intensité du signal.

11. Appareil selon l'une quelconque des revendications 7 à 10, dans lequel le système de communication cellulaire (60) est un système UMTS (Universal Mobile Telephone Standard).

12. Appareil selon la revendication 11, dans lequel le canal de réserve à bas débit est une voie support fournie par une combinaison d'un canal d'accès aléatoire, RACH, et d'un canal d'accès avancé, FACH.

13. Unité de communication comprenant l'appareil selon l'une quelconque des revendications 7 à 12.

14. Système de communication cellulaire comprenant l'appareil selon l'une quelconque des revendications 7 à 12.

15. Unité de communication comprenant des moyens pour exécuter les étapes selon l'une quelconque des revendications 1 à 6.

16. Support de stockage stockant des instructions exécutables par processeur pour commander un processeur de façon qu'il exécute le procédé selon l'une quelconque des revendications 1 à 6.
